# EUROPÄISCHE PATENTSCHRIFT

(11) **EP 1 233 034 B1**
(45) Veröffentlichungstag und Bekanntmachung des Hinweises auf die Patenterteilung: **14.07.2004**
(21) Anmeldenummer: 02002088.9
(22) Anmeldetag: 12.02.2002
(51) Int. Cl.: C08G 59/14, C09D 163/10

(54) **Bindemittel für luftrockende Korrisionsschutzsysteme**
Binder for air-drying corrosion protection compositions
Liants sechant a l'air pour une systeme anticorrosion

(30) Priorität: 20.02.2001 AT 2622001
(43) Veröffentlichungstag der Anmeldung: 21.08.2002
(73) Patentinhaber: Surface Specialties Austria GmbH, 8402 Werndorf (AT)
(72) Erfinder: Paar, Willibald, Dr., 8010 Graz (AT); Krassnitzer, Manfred, 8010 Graz (AT); Friedl, Maximilian,, 8101 Gratkorn (AT); Feola, Roland, Dr., 8045 Graz (AT); Gmoser, Johann, 8045 Graz (AT)
(74) Vertreter: Deckers, Hellmuth, Dr.

(56) Entgegenhaltungen:
- EP-A- 0 814 137
- EP-A- 0 918 071
- AT-B- 390 261
- US-A- 4 358 551
- DATABASE WPI Section Ch, Week 200109 Derwent Publications Ltd., London, GB; Class A21, AN 2001-077832 XP002197949 & JP 2000 327744 A (HITACHI CHEM CO LTD), 28. November 2000 (2000-11-28)

## Beschreibung

Die Erfindung betrifft wäßrige Bindemittel für Korrosionsschutzsysteme, die durch den Luftsauerstoff über ihre olefinischen Doppelbindungen oxydativ vernetzbar sind.

Lufttrocknende Harze oder Bindemittel sind vor allem auf dem Gebiet der Alkydharze bekannt; wasserverdünnbare Alkydharze werden durch Vermischen von (nichtmodifizierten) Alkydharzen mit Emulgatoren oder durch Einbau von einer ausreichenden Anzahl von nach der Kondensationsreaktion verbleibenden Säuregruppen und deren zumindest teilweiser Neutralisation oder die Cokondensation mit hydrophilen Polyoxyalkylen-polyolen wie Polyäthylenglykol gewonnen.

Beispielsweise sind hydroxyfunktionelle Emulgatoren für Alkydharze auf Basis von Polyurethan-Polyharnstoffen aus der EP-A 0 741 156 bekannt. Andere fremdemulgierte wäßrige Alkydharz-Zusammensetzungen sind in der EP-A 0 593 487 beschrieben. Alkydharze mit chemisch eingebautem Emulgator (selbstemulgierend) sind aus der EP-A 0 312 733 bekannt.

Die Wasserverträglichkeit wird in allen Fällen erreicht durch Verwendung von nichtionischen oder anionischen Emulgatoren, in chemisch eingebauter oder zugesetzter Form.

Es ist auch bekannt, Polyurethanharze durch Einbau von ungesättigten Fettsäuren (EP-A 0 444 454) so zu modifizieren, daß damit hergestellte Lacke lufttrocknend sind.

Epoxidgruppen-haltige Harze, die durch Modifikation mit Fettsäuren zu lufttrocknenden Bindemitteln führen, werden beschrieben in den EP-A 0 355 761 (Ester von Fettsäuren mit Epoxidharzen), 0 316 732, 0 370 299, (Acrylatharze mit Epoxidgruppen) und 0 267 562 (mit olefinisch ungesättigten Monomeren in wäßrigem Medium gepfropfte Alkyd-, Urethan-Alkyd- oder Epoxid-Ester-Harze).

Wäßrige Zubereitungen von neutralisierten Reaktionsprodukten aus Epoxidharz-Amin-Addukten und Fettsäuren sind aus der EP-A 0 070 704 bekannt. Hier werden aus Aminen und Epoxidharzen auf Basis von mehrwertigen Phenolen Addukte mit einer molaren Masse von 1000 bis 3000 g/mol hergestellt, die anschließend mit ungesättigten Fettsäuren zu einem Produkt umgesetzt werden, in dem der Massenanteil dieser Fettsäuren 25 bis 50 % beträgt. Die Menge der Fettsäuren ist dabei so zu wählen, daß alle aktiven Amin-Wasserstoffatome verbraucht werden.

Aus der AT-B 390 261 sind Emulsionen von Epoxidharzestern bekannt, die als Bindemittel für lufttrocknende Lacke eingesetzt werden können. Die Harze werden durch Umsetzung von teilweise mit Fettsäuren veresterten Epoxidharzen und Copolymerisaten von ungesättigten Fettsäuren und (Meth)Acrylsäure sowie weiteren copolymerisierbaren Monomeren hergestellt und zur Erzielung der Wasserverdünnbarkeit mit Alkalien zumindest teilweise neutralisiert. Diesen Harzen könne auch aminofunktionelle Epoxidharzester zugemischt werden.

Es wurde nun gefunden, daß Umsetzungsprodukte von Epoxidharzen und fettsäuremodifizierten Epoxid-Amin-Addukten sich als Bindemittel für lufttrocknende Lacke einsetzen lassen, die ausgezeichneten Korrosionsschutz auf metallischen Substraten bewirken.

Gegenstand der Erfindung sind daher Umsetzungsprodukte A'ABC aus Epoxidharzen, Fettsäuren und Aminen, wie in Anspruch 1 definiert.

Insbesondere beträgt die aus der Stöchiometrie berechnete (zahlenmittlere) molare Masse Mₙ dieser Umsetzungsprodukte **A'ABC** vorzugsweise mindestens 10 000 g/mol, bevorzugt mindestens 15 000 g/mol, und besonders bevorzugt mindestens 20 000 g/mol, und ihre (gemessene) Säurezahl nicht mehr als 5 mg/g. Nach zumindest teilweiser Neutralisation der Aminogruppen sind die Umsetzungsprodukte in Wasser dispergierbar und bilden stabile Dispersionen, die auch nach 4-wöchiger Lagerung bei Raumtemperatur (20 °C) keinen Bodensatz bilden.

Die Epoxidharze **A** und **A'** werden unabhängig voneinander aus Di- oder Polyepoxidverbindungen ausgewählt, die in bekannter Weise durch Reaktion von Epichlorhydrin mit aromatischen oder (cyclo)aliphatischen Verbindungen mit zwei oder mehr Hydroxylgruppen pro Molekül erhältlich sind (Taffy-Prozeß), oder durch Umsetzung von Diepoxiden oder Polyepoxiden mit den genannten aromatischen oder (cyclo)aliphatischen Verbindungen mit zwei oder mehr Hydroxylgruppen pro Molekül (Advancement-Reaktion) gewonnen werden können. Bevorzugt werden Epoxidharze auf Basis von aromatischen Dihydroxyverbindungen, wie Bisphenol A, Bisphenol F, Dihydroxydiphenylsulfon, Hydrochinon, Resorcin, 1,4-Bis[2-(4-hydroxyphenyl)-2-propyl]benzol, oder aliphatischen Dihydroxyverbindungen wie Hexandiol-1,6, Butandiol-1,4, Cyclohexandimethanol, oder oligo- und poly-Propylenglykol. Der spezifische Epoxidgruppengehalt der Epoxidharze beträgt bevorzugt 0,4 bis 7 mol/kg, insbesondere 0,6 bis 6 mol/kg. In einer bevorzugten Ausführungsform werden für **A** und **A'** jeweils Diepoxidverbindungen eingesetzt, wobei die spezifischen Epoxidgruppengehalte bei **A** 0,5 bis 4 mol/kg, und bei **A'** 2 bis 5,9 mol/kg betragen.

Besonders bevorzugt werden Epoxidharze auf Basis von Bisphenol A und Bisphenol F sowie deren Mischungen.

Die Fettsäuren **B** weisen mindestens eine olefinische Doppelbindung auf, und haben 6 bis 30, bevorzugt 8 bis 26, und insbesondere 16 bis 22 Kohlenstoffatome. Bevorzugt sind Palmoleinsäure, Ölsäure und Erucasäure; Linolsäure, Linolensäure und Elaostearinsäure, Arachidonsäure und Clupanodonsäure sowie die aus den natürlich vorkommenden Ölen als Gemische erhältlichen Fettsäuren wie Leinölfettsäure, Conjuvandol-Fettsäure, Tallölfettsäure, Baumwollsaatölfettsäure, Rapsölfettsäure, und die aus dehydratisierten Ricinusöl gewonnenen Fettsäuregemische.

Die Amine **C** sind bevorzugt aliphatische, lineare, cyclische oder verzweigte Amine, die mindestens eine primäre oder sekundäre Aminogruppe enthalten. Sie weisen bevorzugt 2 bis 12 Kohlenstoffatome auf und können auch tertiäre Aminogruppen und/oder Hydroxylgruppen als funktionelle Gruppen enthalten. Besonders geeignet sind primäre Monoamine mit 6 bis 12 Kohlenstoffatomen wie Hexylamin, Cyclohexylamin, 2-Äthylhexylamin und Stearylamin, primär-tertiäre Diamine wie Dimethylaminopropylamin, Diäthylaminopropylamin, diprimär-sekundäre Amine wie Diäthylentriamin, Triäthylentetramin und Tetraäthylenpentamin sowie die als ®Polymin im Handel erhältlichen Gemische oligomerer Diaminopolyäthylenimine, ferner sekundäre Amine und Diamine wie Piperidin, Piperazin, Di-n-butylamin, Morpholin, und hydroxyfunktionelle Amine wie Äthanolamin, Diäthanolamin und Diisopropanolamin. Es können auch Gemische der genannten Amine eingesetzt werden.

Es ist möglich, die Zwischenprodukte **ABC** durch sequentielle Reaktion herzustellen, wobei zunächst die Epoxidverbindungen **A** mit den Aminen **C** umgesetzt werden und diese Addukte im zweiten Schritt mit den Fettsäuren **B** zu dem Zwischenprodukt **ABC** reagiert werden. Es ist jedoch auch möglich, zunächst die Epoxidverbindungen **A** mit den Fettsäuren **B** umzusetzen, und die verbliebene Epoxidgruppen dann mit den Aminen C zu reagieren. Es ist ebenfalls möglich, die Reaktion zugleich vorzunehmen und so in einem Schritt zu den Zwischenprodukten **ABC** zu gelangen. Die Mengen der Edukte **A**, **B** und **C** werden so gewählt, daß im wesentlichen alle Epoxidgruppen, d. i. mindestens 90 %, bevorzugt mindestens 95 %, und insbesondere mindestens 98 % der in **A** ursprünglich vorhandenen Epoxidgruppen umgesetzt werden. Ebenso ist die Reaktion vorzugsweise so zu führen, daß das Zwischenprodukt **ABC** keine reaktiven Aminwasserstoffatome mehr aufweist, maximal jedoch darf der Gehalt an Aminwasserstoffatomen 10 mmol/kg betragen.

Eine Variante der vorliegenden Erfindung besteht darin, beim Einsatz von Aminen **C**, die mehr als zwei Aminwasserstoffatome aufweisen, einen Teil dieser Aminwasserstoffatome durch Reaktion mit einem Monoepoxid **A"** zu verbrauchen. So wird aus einer primären Aminogruppe mit zwei aktiven Aminwasserstoffatomen eine sekundäre β-Hydroxyamin-Gruppe, oder aus einer sekundären Aminogruppe eine tertiäre β-Hydroxyamingruppe. Als Monoepoxid **A"** eignen sich beliebige aliphatische oder aromatische Monoepoxide oder deren Gemische, insbesondere Glycidyläther von einwertigen Alkoholen oder Phenolen wie Butylglycidyläther, 2-Äthylhexylglycidyläther, Phenylglycidyläther, sowie Glycidylester einwertiger Säuren, bevorzugt aliphatischer oder aromatischer Carbonsäuren wie Benzoesäureglycidylester, Glycidylacetat, Glycidylstearat sowie die Glycidylester von in α-Stellung verzweigten aliphatischen Carbonsäuren wie Glycidyl-2-äthylhexanoat, Glycidyl-2,2-dimethylpropionat, Glycidyl-2,2-dimethyloctanoat, Glycidyl-2-methylnonanoat, insbesondere technische Gemische solcher verzweigten aliphatischen Ester, die als ®Cardura E5 ("Glycidylneopentanoat") bzw. E10 ("Glycidylneodecanoat") oder ®Glydexx im Handel erhältlich sind.

Gemäß dieser Variante werden die Amine **C** ganz oder teilweise vor der Umsetzung mit **A** oder mit **AB** durch die Reaktion mit den Monoepoxiden **A"** in ihrer Funktionalität verringert. Diese modifizierten Amine **C'** werden anschließend alleine oder in Mischung mit den nichtmodifzierten Aminen **C** in der weiteren Reaktion mit **A** oder mit **AB** (stufenweise Reaktion) oder mit **A** und **B** (gemeinsame Reaktion) eingesetzt.

Es ist im Rahmen der Erfindung auch möglich, die Epoxidharze **A** vor, während oder nach der Umsetzung mit den Reaktionspartnern **B** und **C** mit weiteren Verbindungen **D** umzusetzen, die über mindestens ein gegenüber Epoxidgruppen reaktives Wasserstoffatom verfügen, also Alkoholen, Phenolen und Säuren, insbesondere Verbindungen mit aktivierten Hydroxylgruppen und Säuregruppen, die bevorzugt ausgewählt sind aus aliphatischen Di- und Polyolen wie Glykol, Propandiol, Neopentylglykol, Glycerin, Trimethylolpropan, Pentaerythrit, Ditrimethylolpropan und Dipentaerythrit, (substituierten) Phenolen wie Phenol selbst, den isomeren Kresolen und Xylenolen sowie mehrwertigen und/oder mehrkernigen Phenolen wie Resorcin, Dihydroxydiphenyl, Dihydroxydiphenylsulfon, Bisphenol A, α-und β-Naphthol und 2,3- sowie 2,6-Dihydroxynaphthalin, ein- und mehrbasigen Carbonsäuren wie gesättigten aliphatischen linearen oder verzweigten Carbonsäuren mit 2 bis 40 Kohlenstoffatomen wie iso-Octansäure, Stearinsäure, den dimeren Fettsäuren, aromatischen Carbonsäuren wie Benzoesäure, Iso- und Terephthalsäure, Sulfonsäuren wie Benzolsulfonsäure und Sulfoisophthalsäure, Phosphorsäure, Alkyl- und Arylphosphonsäuren wie Methan- und Benzolphosphonsäure.

Zur Herstellung der erfindungsgemäßen Umsetzungsprodukte **A'ABC** werden die Komponenten bevorzugt in den folgenden Stoffmengenanteilen umgesetzt:
auf 1 mol der Epoxidverbindung **A** werden 0,1 bis 1,0 mol, bevorzugt 0,2 bis 0,9 mol und besonders bevorzugt 0,25 bis 0,8 mol der Fettsäuren **B** und 0,5 bis 1,9 mol, bevorzugt 0,6 bis 1,75 mol, und besonders bevorzugt 0,65 bis 1,5 mol der Amine **C** in der ersten Stufe eingesetzt, und darauf in der zweiten Stufe 0,2 bis 1,0 mol, bevorzugt 0,25 bis 0,9, besonders bevorzugt 0,3 bis 0,8 mol der Epoxidverbindung **A'** mit dem Addukt der ersten Stufe reagiert.

Werden dabei Verbindungen **D** eingesetzt, so ist deren Stoffmengenanteil je 1 mol der Epoxidverbindung A 0,02 bis 0,3 mol, bevorzugt 0,05 bis 0,25 mol, und besonders bevorzugt 0,1 bis 0,2 mol. Die Verbindungen **D** können vor der Reaktion mit **B** und/oder **C** zur Modifizierung der Epoxidverbindungen eingesetzt werden; es ist auch möglich, sie gemeinsam mit den Komponenten **B** und/oder **C** einzusetzen.

Werden Monoepoxid-Verbindungen **A"** zur Modifizierung der Amine **C** eingesetzt, so ist deren Stoffmenge so zu wählen, daß die Amine **C'** im Mittel noch über mindestens ein reaktives Aminwasserstoffatom je Molekül verfügen.

Werden die Epoxidverbindungen **A** bzw. **A'** oder die Amine **C** ganz oder teilweise durch diese modifizierten Verbindungen gemäß den beiden vorangehenden Abschnitten ersetzt, so ist anstelle von **A, A'** und **C** jeweils das Gemisch bzw. die modifizierte Verbindung einzusetzen.

Die Herstellung der Umsetzungsprodukte **A'ABC** erfolgt durch Umsetzung der Komponenten **A, B** und **C** vorzugsweise in einem unter den Reaktionsbedingungen inerten Lösungsmittel bei einer Temperatur von 70 bis 150 °C, wobei die Konzentration (Massenanteil) der Komponenten **A, B** und **C** (sowie gegebenenfalls **D**) in der Lösung 30 bis 85 %, bevorzugt 50 bis 80 %, beträgt. Als Lösungsmittel werden bevorzugt Ätheralkohole (Alkoxyalkanole mit 3 bis 10 Kohlenstoffatomen) wie Methoxypropanol, Isopropylglykol, Butylglykol und 3-Methoxybutanol-1 eingesetzt. Die Lösung des Addukts **ABC** wird nach Beenden der Reaktion (vollständiger Verbrauch der Epoxidgruppen) durch Zugabe von organischen oder anorganischen Säuren neutralisiert, bis zu einem Neutralisationsgrad (prozentualer Anteil an in die Salzform überführten tertiären Aminogruppen, bezogen auf deren Gesamtmenge) von 20 bis 100 %, bevorzugt 30 bis 90 %, und insbesondere 50 bis 85 %, und die (teilweise) neutralisierte Lösung des Addukts wird mit Wasser auf einen Festkörper-Massenanteil von 20 bis 60%, bevorzugt 25 bis 55 %, und besonders bevorzugt 30 bis 50 %, verdünnt. Dabei kann die organische Lösung in (bevorzugt vorgewärmtes) Wasser eingerührt werden, oder Wasser kann in die organische Lösung eingerührt werden. Es ist auch bevorzugt möglich, einen Teil der zur Neutralisation verwendeten Säure, bevorzugt 20 bis 80 %, in das zur Verdünnung verwendete Wasser zu geben. Die zur Neutralisation verwendeten Säuren sind bevorzugt ausgewählt aus Borsäure, Phosphorsäure, Ameisensäure, Essigsäure, Milchsäure, Citronensäure und Weinsäure. In die wäßrige Lösung wird bei einer Temperatur von 60 bis 99 °C, bevorzugt 70 bis 97 °C, und besonders bevorzugt 75 bis 95 °C die Epoxidverbindung **A'** langsam zugegeben, und die Umsetzung wird solange durchgeführt, bis alle Epoxidgruppen verbraucht sind.

Die Umsetzungsprodukte **A'ABC** sind geeignet als Bindemittel zur Herstellung von wäßrigen Beschichtungsmitteln, die an der Luft durch Oxidation trocknen. Dazu werden Beschichtungszusammensetzungen, die diese Bindemittel enthalten, auf bekannte Weise wie Spritzen, Streichen oder Tauchen auf die Substrate aufgetragen. Die Beschichtungen schützen das Substrat vor korrosiven Einwirkungen durch Säuren, Alkalien, Salzlösungen und Wasser. Daher eignen sich die erfindungsgemäßen Umsetzungsprodukte insbesondere zur Formulierung von Korrosionsschutz-Grundierungen zur Anwendung auf Blechen oder anderen Oberflächen von unedlen Metallen (die in der Spannungsreihe vor Wasserstoff stehen), also insbesondere für Bleche aus Eisen, verzinktem Eisen, Stahl, Aluminium und Aluminiumlegierungen. Solche Beschichtungsmittel enthalten auch die üblichen Zusätze wie Entschäumer, Verlaufshilfsmittel, Pigmente, Dispergiermittel, Antiabsetzmittel und Verdicker.

### Beispiele

### Beispiel 1 Bindemittel

1900 g eines Epoxidharzes auf Basis von Bisphenol A mit einem spezifischen Epoxidgruppengehalt von 2,1 mol/kg ("Epoxidäquivalentgewicht" EEW = 475 g/mol) wurden in Methoxypropanol als Lösungsmittel mit 420 g Tallölfettsäure (1,5 mol), 102 g Dimethylaminopropylamin (1 mol) und 53 g (0,5 mol) Diäthanolamin zu einer 70 %igen Lösung (70 g Feststoff in 100 g der Lösung) gelöst und bei 110 °C bis zum vollständigen Verbrauch der Epoxidgruppen reagiert.

Anschließend wurden 60 mmol Essigsäure auf 100 g des Festharzes zugegeben, und dann wurde mit voll entsalztem Wasser verdünnt auf einen Festkörper-Massenanteil (Massenanteil an nichtflüchtigen Stoffen) von 40 %.

Zu dieser wäßrigen Lösung wurde bei 90 °C innerhalb von einer Stunde 250 g Bisphenol A-Diglycidyläther zugegeben, und die Mischung wurde unter Rühren bei dieser Temperatur gehalten, bis keine Epoxidgruppen mehr nachweisbar waren. Durch weiteren Zusatz von Wasser wurde auf einen Festkörper-Massenanteil von 38 % verdünnt.

### Beispiel 2 Grundiermittel (Primer)

Mit diesem Bindemittel wurde ein kationischer Primer formuliert, wobei in einem Gemisch von 88 g voll entsalztem Wasser, 22 g eines handelsüblichen Dispergiermittels (®Additol VXW 6208, Solutia Austria GmbH) und 3 g eines handelsüblichen Entschäumers (®Surfynol SE-F, E.I. DuPont de Nemours) unter Zusatz von 6 g eines Thixotropiermittels (®Luwothix HT, Lehmann & Voss) und 3 g eines Acrylatverdickers (®Acrysol RM 8/12 WA, Rohm & Haas) eine Aufschlämmung hergestellt wurde von 62 g eines Eisenoxidpigments (®Bayferrox, Bayer AG), 106 g eines modifizierten Zinkphosphats (®Heucophos ZPO, Heubach), 55 g eines Kaolins (®ASP 600, Engelhardt) und 55 g eines Talkums (®Talkum AT1, Norwegian Talc ). Zu dieser Aufschlämmung wurden 480 g der obigen Bindemittellösung in Wasser, und 3 g eines Kobaltoctoat-Sikkativs (als 3 % ige Lösung in Wasser) sowie weitere 117 g Wasser gegeben. Der erhaltene wäßrige Primer hatte eine Auslaufzeit (4 mm-Becher; DIN-EN-ISO 2431 bzw. DIN 53 211) von ca. 30 s.

### Vergleichsbeispiele (Beispiel 3 und 4)

Als Vergleich wurden ein Primer 3 (Beispiel 3) auf Basis einer wäßrigem Emulsion eines oxydativ trocknenden Epoxidharzesters (®Duroxyn VEF 4380, Solutia Austria GmbH) und ein konventioneller lösungsmittelhaltiger Primer 4 (Beispiel 4) auf Basis eines Harzsäuremodifizierten mittelöligen Alkydharzes (®Vialkyd AM 404, Solutia Austria GmbH) herangezogen. Deren Formulierungen sind der nachstehenden Tabelle 1 zu entnehmen.

**Tabelle 1:**

| Zusammensetzung der Grundierungen (Primer) | | | | | |
|---|---|---|---|---|---|
| Bestandteile | Hersteller | Funktion | Primer 2 (erfindungsgemäß) | Primer 3 (Epoxidharzeszter) | Primer 4 (konventioneller Alkydharz-Primer |
| | | Bindemittel | aus Beispiel 1 480 g | ®Duroxyn VEF 4380 583 g | ®Vialkyd AM 404 350 g |
| Wasser | | Verdünnung | 88 g | | |
| AMP 90 | Angus | Neutralisationsmittel | | 2 g | |
| ®Additol VXW 6208 | Solutia Austria GmbH | Dispergiermittel | 22 g | 6 g | 10 g |
| ®Surfynol SE-F | E.I.DuPont de Nemours | Entschäumer | 3 g | 3 g | |
| ®Bayferrox 140 | Bayer AG | Eisenoxidpigment | 62 g | 88 g | 99 g |
| ®Heucopohos ZPO | Heubach | Zinkphosphat | 106 g | 100 g | 101 g |
| ®ASP 600 | Engelhardt | Kaolin | 55 g | 60 g | 60 g |
| ®Talcum AT1 | Norwegian Talc | Talkum | 55 g | 60 g | 60 g |
| ®Luwothix HT | Lehmann & Voss | Antiabsetzmittel | 6 g | 6 g | 10 g |
| ®Acrysol RM 8/12 WA | Rohm & Haas | Verdicker | 3 g | 10 g | |
| ®Additol XL 280 | Solutia Austria GmbH | Antiabsetzmittel | | | 19 g |
| Co-Oktoat 3 %ige wäßr. Lsg. | | Sikkativ | 3 g | 6 g | |
| Wasser | | Verdünnung | 117 g | 76 g | |
| Xylol | | Verdünnung | | | 278 g |
| Lack | | | 1000 g | 1000 g | 1000 g |

Diese Primer (Grundierungen) wurden auf Industrie-Eisenbleche (unbehandelt) mit einer Trockenfilmstärke von ca. 30 µm appliziert durch Aufspritzen (Spritzviskosität gemessen als Auslaufzeit aus einem 4 mm-Becher gemäß DIN EN ISO 2431: ca. 30 s). Nach einer Trocknungszeit von 10 Tagen bei Raumtemperatur wurde ein Korrosionstest gemäß DIN 50021 durchgeführt. Die Ergebnisse sind in der Tabelle 2 zusammengefaßt:

**Tabelle 2:**

| Ergebnisse des Korrosionstests | | | |
|---|---|---|---|
| Korrosionsschutz nach Belastung von | Primer 2 | Primer 3 (Vergleich) | Primer 4 (Vergleich) |
| 72 h | + | + | + |
| 144 h | + | 0 | + |
| 240 h | + | - | + |
| 400 h | + | | - |
| Dabei wurde normgemäß bewertet als "sehr gut" : +; als "ausreichend" : 0; und als "mangelhaft" : -. | | | |

Im Vergleich mit bekannten wäßrigen Primern auf Basis von oxydativ trocknenden Epoxidharzestern und bekannten konventionellen (Lösungsmittel-haltigen) Primern auf Alkydharzbasis ergibt sich eine erheblich günstigere Korrosionsschutzwirkung.

## Patentansprüche

1. Umsetzungsprodukte **A'ABC** aus Epoxidharzen, Fettsäuren und Aminen, **dadurch gekennzeichnet, daß** sie Reaktionsprodukte von Epoxidverbindungen **A'** mit mindestens zwei Epoxidgruppen pro Molekül und Reaktionsprodukten **ABC** von Epoxidverbindungen **A**, ungesättigten Fettsäuren **B** und Aminen **C** mit mindestens einer primären oder sekundären Aminogruppe sind, wobei in den Reaktionsprodukten **ABC** mindestens 90 % der **A** ursprünglich vorhanden Epoxidgruppen umgesetzt sind, und daß in den Reaktionsprodukten **ABC** der Gehalt an Aminwasserstoffatomen höchstens 10 mmol/kg beträgt, und daß die zahlenmittlere molare Masse Mₙ der Umsetzungsprodukte **A'ABC** mindestens 5000 g/mol beträgt, wobei gegebenenfalls die Epoxidverbindungen **A'** und/oder die Epoxidverbindungen **A** vor der weiteren Umsetzung teilweise oder vollständig durch Reaktion mit Verbindungen **D** mit mindestens einer gegenüber Epoxidgruppen reaktiven Säure- oder Hydroxylgruppe modifiziert sind, und wobei gegebenenfalls die Amine **C** vor der weiteren Reaktion teilweise oder vollständig durch Umsetzung mit aliphatischen oder aromatischen Monoepoxidverbindungen **A"** oder deren Gemischen modifiziert sind.

2. Umsetzungsprodukte nach Anspruch 1, **dadurch gekennzeichnet, daß** die Epoxidverbindungen **A'** und die Epoxidverbindungen **A** unabhängig voneinander Di- oder Polyepoxidverbindungen mit einem spezifischen Epoxidgruppengehalt von 0,4 bis 7 mol/kg sind.

3. Umsetzungsprodukte nach Anspruch 1, **dadurch gekennzeichnet, daß** die Epoxidverbindungen **A** einen spezifischen Epoxidgruppengehalt von 0,5 bis 4 mol/kg aufweisen.

4. Umsetzungsprodukte nach Anspruch 1, **dadurch gekennzeichnet, daß** die Epoxidverbindungen **A'** einen spezifischen Epoxidgruppengehalt von 2 bis 5,9 mol/kg aufweisen.

5. Umsetzungsprodukte nach Anspruch 1, **dadurch gekennzeichnet, daß** die Epoxidverbindungen **A'** und die Epoxidverbindungen **A** unabhängig voneinander Epoxidverbindungen auf Basis von Bisphenol A und/oder Epoxidverbindungen auf Basis von Bisphenol F sind.

6. Umsetzungsprodukte nach Anspruch 1, **dadurch gekennzeichnet, daß** die Fettsäuren **B** 6 bis 30 Kohlenstoffatome aufweisen.

7. Umsetzungsprodukte nach Anspruch 1, **dadurch gekennzeichnet, daß** die Amine **C** aliphatische lineare, cyclische oder verzweigte Amine mit mindestens einer primären oder sekundären Aminogruppe sind.

8. Umsetzungsprodukte nach Anspruch 1, **dadurch gekennzeichnet, daß** die Epoxidverbindungen **A'** und/oder die Epoxidverbindungen **A** vor der weiteren Umsetzung teilweise oder vollständig durch Reaktion mit Verbindungen **D** mit mindestens einer gegenüber Epoxidgruppen reaktiven Säure- oder Hydroxylgruppe modifiziert sind.

9. Umsetzungsprodukte nach Anspruch 8, **dadurch gekennzeichnet, daß** die Verbindungen **D** aromatische Hydroxyverbindungen und/oder gesättigte aliphatische lineare oder verzweigte Carbonsäuren mit 2 bis 40 Kohlenstoffatomen und/oder Sulfonsäuren und/oder Phosphorsäure und/oder Alkyl- und Arylphosphonsäuren sind.

10. Umsetzungsprodukte nach Anspruch 1, **dadurch gekennzeichnet, daß** die Amine **C** vor der weiteren Reaktion teilweise oder vollständig durch Umsetzung mit aliphatischen oder aromatischen Monoepoxidverbindungen **A"** oder deren Gemischen modifiziert sind.

11. Umsetzungsprodukte nach Anspruch 10, **dadurch gekennzeichnet, daß** die Monoepoxidverbindungen **A"** Glycidyläther von einwertigen Alkoholen oder Phenolen und/oder Glycidylester von einwertigen Säuren sind.

12. Umsetzungsprodukte nach Anspruch 10, **dadurch gekennzeichnet, daß** die Monoepoxidverbindungen **A"** Butylglycidyläther und/oder 2-Äthylhexylglycidyläther und/oder Glycidyl-neopentanoat und/oder Glycidyl-neodecanoat und/oder Glycidyl-2-äthylhexanoat sind.

13. Verfahren zur Herstellung der Umsetzungsprodukte nach Anspruch 1, **dadurch gekennzeichnet, daß** in der ersten Stufe ein Addukt **ABC** durch Umsetzung der Epoxidverbindungen **A**, der Fettsäuren **B** und der Amine **C** hergestellt wird, das in einer zweiten Stufe mit Epoxidverbindungen **A'** zu den Umsetzungsprodukten **A'ABC** reagiert wird, wobei gegebenenfalls die Epoxidverbindungen **A'** und/oder die Epoxidverbindungen **A** vor der weiteren Umsetzung teilweise oder vollständig durch Reaktion mit Verbindungen **D** mit mindestens einer gegenüber Epoxidgruppen reaktiven Säure- oder Hydroxylgruppe modifiziert sind, und wobei gegebenenfalls die Amine **C** vor der weiteren Reaktion teilweise oder vollständig durch Umsetzung mit aliphatischen oder aromatischen Monoepoxidverbindungen **A"** oder deren Gemischen modifiziert sind.

14. Verfahren nach Anspruch 13, **dadurch gekennzeichnet, daß** in einer ersten Stufe die Epoxidverbindungen **A** und die Fettsäuren **B** zu einem Addukt **AB** reagiert werden, das in einer zweiten Stufe mit Aminen **C** zu einem Zwischenprodukt **ABC** umgesetzt wird, welches wiederum in einer dritten Stufe durch Reaktion mit den Epoxidverbindungen **A'** das Umsetzungsprodukt **A'ABC** bildet.

15. Verfahren nach Anspruch 13, **dadurch gekennzeichnet, daß** in einer ersten Stufe die Epoxidverbindungen **A** mit Aminen **C** zu einem Addukt **AC** reagiert werden, das in einer zweiten Stufe mit den Fettsäuren **B** zu einem Zwischenprodukt **ABC** umgesetzt wird, das wiederum in einer dritten Stufe durch Reaktion mit den Epoxidverbindungen **A'** das Umsetzungsprodukt **A'ABC** bildet.

16. Verfahren nach einem der Ansprüche 13 bis 15, **dadurch gekennzeichnet, daß** die Epoxidverbindungen **A'** teilweise oder vollständig ersetzt sind durch Umsetzungsprodukte von Epoxidverbindungen **A'** mit Verbindungen **D**.

17. Verfahren nach einem der Ansprüche 13 bis 15, **dadurch gekennzeichnet, daß** die Epoxidverbindungen **A** teilweise oder vollständig ersetzt sind durch Umsetzungsprodukte von Epoxidverbindungen **A** mit Verbindungen **D**.

18. Verfahren nach einem der Ansprüche 13 bis 15, **dadurch gekennzeichnet, daß** die Amine **C** teilweise oder vollständig ersetzt sind durch Umsetzungsprodukte von Aminen **C** mit Monoepoxidverbindungen **A"**.

19. Verwendung der Umsetzungsprodukte nach Anspruch 1 in Grundierungen zum Schutz vor Korrosion.

20. Korrosionsschutz-Grundiermittel enthaltend Umsetzungsprodukte nach Anspruch 1.

21. Bleche aus unedlen Metallen, beschichtet mit Korrosionsschutz-Grundiermitteln nach Anspruch 20.

## Claims

1. A product **A'ABC** of reaction of epoxy resins, fatty acids, and amines, wherein it is a reaction product of epoxide compounds **A'** containing at least two epoxide groups per molecule and reaction products **ABC** of epoxide compounds **A**, unsaturated fatty acids **B**, and amines **C** containing at least one primary or secondary amino group, at least 90% of the epoxide groups originally present in **A** being reacted in the reaction products **ABC**, and wherein the reaction products **ABC** contain at most 10 mmol/kg of amine hydrogen atoms, and wherein the number average molar mass Mₙ of the reaction product **A'ABC** is at least 5 000 g/mol, and, where appropriate, the epoxide compounds **A'** and/or the epoxide compounds **A** have been modified prior to further reaction, in whole or in part, by reaction with compounds **D** containing at least one acid group or hydroxyl group reactive toward epoxide groups, and, where appropriate, the amines **C** have been modified prior to further reaction, in whole or in part, by reaction with aliphatic or aromatic monoepoxide compounds **A"** or mixtures thereof.

2. The product as claimed in claim 1, wherein the epoxide compounds **A'** and the epoxide compounds **A** independently of one another are diepoxide or polyepoxide compounds having a specific epoxide group content of from 0.4 to 7 mol/kg.

3. The product as claimed in claim 1, wherein the epoxide compounds **A** have a specific epoxide group content of from 0.5 to 4 mol/kg.

4. The product as claimed in claim 1, wherein the epoxide compounds **A'** have a specific epoxide group content of from 2 to 5.9 mol/kg.

5. The product as claimed in claim 1, wherein the epoxide compounds **A'** and the epoxide compounds **A** independently of one another are epoxide compounds based on bisphenol A and/or epoxide compounds based on bisphenol F.

6. The product as claimed in claim 1, wherein the fatty acids **B** contain from 6 to 30 carbon atoms.

7. The product as claimed in claim 1, wherein the amines **C** are aliphatic linear, cyclic or branched amines which contain at least one primary or secondary amino group.

8. The product as claimed in claim 1, wherein the epoxide compounds **A'** and/or the epoxide compounds **A**, prior to further reaction, have been modified in whole or in part by reaction with compounds D which contain at least one acid group or hydroxyl group which is reactive toward epoxide groups.

9. The product as claimed in claim 8, wherein the compounds **D** are aromatic hydroxy compounds and/or saturated aliphatic linear or branched carboxylic acids having from 2 to 40 carbon atoms and/or sulfonic acids and/or phosphoric acid and/or alkyl- and arylphosphonic acids.

10. The product as claimed in claim 1, wherein the amines **C**, prior to further reaction, have been modified in whole or in part by reaction with aliphatic or aromatic monoepoxide compounds **A"** or mixtures thereof.

11. The product as claimed in claim 10, wherein the monoepoxide compounds **A"** are glycidyl ethers of monohydric alcohols or phenols and/or glycidyl esters of monobasic acids.

12. The product as claimed in claim 10, wherein the monoepoxide compounds **A"** are butyl glycidyl ether and/or 2-ethylhexyl glycidyl ether and/or glycidyl neopentanoate and/or glycidyl neodecanoate and/or glycidyl 2-ethylhexanoate.

13. A process for preparing the product as claimed in claim 1, which comprises in the first stage preparing an adduct **ABC** by reacting the epoxide compounds **A**, the fatty acids **B**, and the amines **C** and in a second stage reacting said adduct with epoxide compounds **A'** to give the reaction products **A'ABC**, where appropriate, the epoxide compounds **A'** and/or the epoxide compounds **A** have been modified prior to further reaction, in whole or in part, by reaction with compounds **D** containing at least one acid group or hydroxyl group reactive toward epoxide groups, and, where appropriate, the amines **C** have been modified prior to further reaction, in whole or in part, by reaction with aliphatic or aromatic monoepoxide compounds **A"** or mixtures thereof.

14. The process as claimed in claim 13, wherein the epoxide compounds **A** and the fatty acids **B** are reacted in a first stage to give an adduct **AB** which in a second stage is reacted with amines **C** to give an intermediate **ABC** which in turn in a third stage forms, by reaction with the epoxide compounds **A'**, the reaction product **A'ABC**.

15. The process as claimed in claim 13, wherein the epoxide compounds **A** are reacted in a first stage with amines **C** to give an adduct **AC** which in a second stage is reacted with the fatty acids **B** to give an intermediate **ABC** which in turn in a third stage forms, by reaction with the epoxide compounds **A'**, the reaction product **A'ABC**.

16. The process as claimed in any of claims 13 to 15, wherein the epoxide compounds **A'** are replaced in whole or in part by reaction products of epoxide compounds **A'** with compounds **D**.

17. The process as claimed in any of claims 13 to 15, wherein the epoxide compounds **A** are replaced in whole or in part by reaction products of epoxide compounds **A** with compounds **D**.

18. The process as claimed in any of claims 13 to 15, wherein the amines **C** are replaced in whole or in part by reaction products of amines **C** with monoepoxide compounds **A"**.

19. The use of a product as claimed in claim 1 in a primer to protect against corrosion.

20. An anticorrosion primer composition comprising a product as claimed in claim 1.

21. A sheet of a base metal, coated with an anticorrosion primer composition as claimed in claim 20.

## Revendications

1. Produits réactionnels **A'ABC** à partir de résines époxydes, d'acides gras et d'amines, **caractérisés en ce qu'**ils sont des produits réactionnels de composés époxydes **A'** présentant au moins deux groupes époxydes par molécule et des produits réactionnels **ABC** de composés époxydes **A**, d'acides gras insaturés **B** et d'amines **C** avec au moins un groupe amino primaire ou secondaire, dans les produits réactionnels **ABC** au moins 90 % des groupes époxydes présents à l'origine dans **A** ont réagi et **en ce que** dans les produits réactionnels **ABC** la teneur en atomes d'hydrogène d'amine est d'au maximum 10 mmole/kg, et **en ce que** la masse moléculaire moyenne en nombre Mₙ des produits réactionnels **A'ABC** est d'au moins 5000 g/mole, les composés époxydes **A'** et/ou composés époxydes **A** sont éventuellement partiellement ou complètement modifiés, avant la transformation ultérieure, par réaction sur des composés **D** présentant au moins un groupe acide ou hydroxyle réactif sur les groupes époxydes, et les amines **C** sont éventuellement partiellement ou complètement modifiés, avant la réaction ultérieure, par réaction sur des composés monoépoxydes **A"** aliphatiques ou aromatiques ou leurs mélanges.

2. Produits réactionnels selon la revendication 1, **caractérisés en ce que** les composés époxydes **A'** et les composés époxydes **A** sont indépendamment l'un de l'autre des composés di- ou polyépoxydes ayant une teneur spécifique en groupes époxydes de 0,4 à 7 mole/kg.

3. Produits réactionnels selon la revendication 1, **caractérisés en ce que** les composés époxydes **A** présentent une teneur spécifique en groupes époxydes de 0,5 à 4 mole/kg.

4. Produits réactionnels selon la revendication 1, **caractérisés en ce que** les composés époxydes **A'** présentent une teneur spécifique en groupes époxydes de 2 à 5,9 mole/kg.

5. Produits réactionnels selon la revendication 1, **caractérisés en ce que** les composés époxydes **A'** et les composés époxydes **A** indépendamment les uns des autres sont des composés époxydes à base de bisphénol A et/ou composés époxydes à base de bisphénol F.

6. Produits réactionnels selon la revendication 1, **caractérisés en ce que** les acides gras B présentent de 6 à 30 atomes de carbone.

7. Produits réactionnels selon la revendication 1, **caractérisés en ce que** les amines **C** sont des amines aliphatiques linéaires, cycliques ou ramifiés avec au moins un groupe amino primaire ou secondaire.

8. Produits réactionnels selon la revendication 1, **caractérisés en ce que** les composés époxydes **A'** et/ou les composés époxydes **A** sont partiellement ou complètement modifiés, avant la transformation ultérieure, par réaction sur les composés **D** présentant au moins un groupe acide ou hydroxyle réactif sur les groupes époxydes.

9. Produits réactionnels selon la revendication 8, **caractérisés en ce que** les composés **D** sont des composés hydroxylés aromatiques et/ou acides carboxyliques aliphatiques saturés linéaires ou ramifiés présentant 2 à 40 atomes de carbone et/ou acides sulfoniques et/ou acide phosphorique et/ou acides alkyl- et arylphosphoniques.

10. Produits réactionnels selon la revendication 1, **caractérisés en ce que** les amines **C** sont partiellement ou complètement modifiés, avant la réaction ultérieure, par réaction sur des composés monoépoxydes **A"** aliphatiques ou aromatiques ou leurs mélanges.

11. Produits réactionnels selon la revendication 10, **caractérisés en ce que** les composés monoépoxydes **A"** sont des éthers glycidyliques d'alcools ou de phénols monofonctionnels et/ou esters glycidyliques d'acides monofonctionnels.

12. Produits réactionnels selon la revendication 10, **caractérisés en ce que** les composés monoépoxydes **A"** sont l'éther butylglycidylique et/ou l'éther 2-éthylhéxylglycidylique et/ou le néopentanoate de glycidyle et/ou le néodécanoate de glycidyle et/ou le 2-éthylhexanoate de glycidyle.

13. Procédé pour la préparation des produits réactionnels selon la revendication 1, **caractérisé en ce qu'**on prépare dans la première étape un produit d'addition **ABC** par réaction des composés époxydes **A**, des acides gras **B** et des amines **C**, que l'on fait réagir dans une deuxième étape sur des composés époxydes **A'** en vue de l'obtention des produits réactionnels **A'ABC**, éventuellement en modifiant partiellement ou complètement les composés époxydes **A'** et/ou les composés époxydes **A**, avant la réaction ultérieure, par réaction sur les composés **D** présentant au moins un groupe acide ou hydroxyle réactif sur les groupes époxydes, et éventuellement en modifiant partiellement ou complètement les amines **C**, avant la réaction ultérieure, par réaction sur les composés monoépoxydes **A"** aliphatiques ou aromatiques ou leurs mélanges.

14. Procédé selon la revendication 13, **caractérisé en ce qu'**on fait réagir dans une première étape les composés époxydes **A** et les acides gras **B** en vue de l'obtention d'un produit d'addition **AB**, que l'on transforme dans une deuxième étape par les amines **C** en vue de l'obtention d'un produit intermédiaire **ABC**, qui forme à son tour, dans une troisième étape, par réaction sur les composés époxydes **A'**, le produit réactionnel **A'ABC**.

15. Procédé selon la revendication 13, **caractérisé en ce qu'**on fait réagir dans une première étape les composés époxydes **A** sur les amines **C** en vue de l'obtention d'un produit d'addition **AC,** que l'on fait réagir dans une deuxième étape sur les acides gras **B** en vue de l'obtention d'un produit intermédiaire **ABC**, qui forme à son tour, dans une troisième étape, par réaction sur les composés époxydes **A'**, le produit réactionnel **A'ABC**.

16. Procédé selon l'une des revendications 13 à 15, **caractérisé en ce qu'**on remplace partiellement ou complètement les composés époxydes **A'** par des produits réactionnels des composés époxydes **A'** sur les composés **D**.

17. Procédé selon l'une des revendications 13 à 15, **caractérisé en ce qu'**on remplace partiellement ou complètement les composés époxydes **A** par des produits réactionnels des composés époxydes **A** sur les composés **D**.

18. Procédé selon l'une des revendications 13 à 15, **caractérisé en ce qu'**on remplace partiellement ou complètement les amines **C** par des produits réactionnels des amines **C** sur les composés monoépoxydes **A"**.

19. Utilisation des produits réactionnels selon la revendication 1 pour la couche de fond pour là protection contre la corrosion.

20. Agent de couche de fond pour la protection contre la corrosion renfermant des produits réactionnels selon la revendication 1.

21. Tôles de métaux courants, revêtues d'agents de couche de fond pour la protection contre la corrosion selon la revendication 20.
